(19) Europäisches Patentamt
European Patent Office
Office européen des brevets

(11) **EP 4 557 781 A1**

(12) **EUROPEAN PATENT APPLICATION**
published in accordance with Art. 153(4) EPC

(43) Date of publication:
**21.05.2025 Bulletin 2025/21**

(21) Application number: **23869605.8**

(22) Date of filing: **28.04.2023**

(51) International Patent Classification (IPC):
***H04W 4/029*** (2018.01)

(52) Cooperative Patent Classification (CPC):
**H04W 4/02; H04W 4/021; H04W 4/029**

(86) International application number:
**PCT/CN2023/091900**

(87) International publication number:
**WO 2024/066350 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.09.2022 CN 202211182526**

(71) Applicant: **ZTE Corporation**
**Shenzhen, Guangdong 518057 (CN)**

(72) Inventors:
• **CHEN, Shijun**
**Shenzhen, Guangdong 518057 (CN)**

• **CHEN, Dawei**
**Shenzhen, Guangdong 518057 (CN)**
• **LI, Junqiang**
**Shenzhen, Guangdong 518057 (CN)**
• **LIN, Xu**
**Shenzhen, Guangdong 518057 (CN)**
• **LI, Yongbiao**
**Shenzhen, Guangdong 518057 (CN)**
• **XIA, Shuqiang**
**Shenzhen, Guangdong 518057 (CN)**

(74) Representative: **Savi, Massimiliano et al**
**Notarbartolo & Gervasi S.p.A.**
**Viale Achille Papa, 30**
**20149 Milano (IT)**

(54) **PARTITION TRAJECTORY TARGET SENSING METHOD, COMMUNICATION DEVICE AND STORAGE MEDIUM**

(57)    A partition trajectory target sensing method, a communication device, and a storage medium are disclosed. The partition trajectory target sensing method includes: performing delay-Doppler spectrum calculation for a received signal of each sensing signal period to obtain comprehensive delay-Doppler spectra of the received signal which include information of all targets, the comprehensive delay-Doppler spectrum includes angle information (S100); performing partitioning, prioritizing, and extraction of the angle information on the comprehensive delay-Doppler spectra to obtain delay-angle-of-arrival spectra of prioritized targets in the partitions (S200); determining a moving trajectory according to timing of the delay-angle-of-arrival spectra of the prioritized targets in the partitions (S300); and determining a moving target according to the moving trajectory (S400).

Perform delay-Doppler spectrum calculation for a received signal of each received sensing signal period to obtain comprehensive delay-Doppler spectra of the received signal which include information of all targets, where the comprehensive delay-Doppler spectrum includes angle information — S100

Perform partitioning, prioritizing, and extraction of the angle information on the comprehensive delay-Doppler spectra to obtain delay-angle-of-arrival spectra of prioritized targets in partitions — S200

Determine a moving trajectory according to timing of the delay-angle-of-arrival spectra of the prioritized targets in the partitions — S300

Determine a moving target according to the moving trajectory — S400

**FIG. 4**

EP 4 557 781 A1

Description

CROSS-REFERENCE TO RELATED APPLICATION

This application is filed on the basis of Chinese patent application No. 202211182526.7 filed September 27, 2022, and claims priority to the Chinese patent application, the entire contents of which are incorporated herein by reference.

TECHNICAL FIELD

Embodiments of the present disclosure relate to the field of communication technologies, and more particularly, to a partition trajectory target sensing method, a communication device, and a storage medium.

BACKGROUND

In the related art, there are significant challenges in achieving ubiquitous sensing in a complex environment. Due to the presence of numerous reflectors in the complex environment, there are often multiple propagation paths. The energy of a reflected signal may be greater than that of an echo signal of a moving object. Additionally, the reflected signal and the echo signal are not easily distinguishable in terms of speed, angle, and distance. As a result, accurately performing wireless sensing of a moving object in complex environments is difficult.

SUMMARY

Embodiments of the present disclosure provide a partition trajectory target sensing method, a communication device, and a storage medium, to accurately realize wireless sensing of a moving target in a complex environment.

In accordance with a first aspect of the present disclosure, an embodiment provides a partition trajectory target sensing method, including: performing delay-Doppler spectrum calculation for a received signal of each sensing signal period to obtain comprehensive delay-Doppler spectra of the received signal which include information of all targets, where the comprehensive delay-Doppler spectrum includes angle information; performing partitioning, prioritizing, and extraction of the angle information on the comprehensive delay-Doppler spectra to obtain delay-angle-of-arrival spectra of prioritized targets in the partitions; determining a moving trajectory according to timing of the delay-angle-of-arrival spectra of the prioritized targets in the partitions; and determining a moving target according to the moving trajectory.

In accordance with a second aspect of the present disclosure, an embodiment provides a communication device, including: at least one processor; and at least one memory, configured for storing at least one program, where the at least one program, when executed by the at least one processor, causes the at least one processor to implement the partition trajectory target sensing method in accordance with the first aspect.

In accordance with a third aspect of the present disclosure, an embodiment provides a computer-readable storage medium, storing a processor-executable program which, when executed by a processor, causes the processor to implement the partition trajectory target sensing method in accordance with the first aspect.

In accordance with a fourth aspect of the present disclosure, an embodiment provides a computer program product, including a computer program or computer instructions stored in a computer-readable storage medium, where the computer program or computer instructions, when read from the computer-readable storage medium and executed by a processor of a computer device, causes the computer device to implement the partition trajectory target sensing method in accordance with the first aspect.

According to the partition trajectory target sensing method, the communication device, and the storage medium provided in the embodiments of the present disclosure, first, delay-Doppler spectrum calculation is performed for a received signal of each sensing signal period to obtain comprehensive delay-Doppler spectra of the received signal which include information of all targets, where the comprehensive delay-Doppler spectrum includes angle information. Then, partitioning, prioritizing, and extraction of the angle information are performed on the comprehensive delay-Doppler spectra to obtain delay-angle-of-arrival spectra of prioritized targets in partitions. Afterward, a moving trajectory is determined according to timing of the delay-angle-of-arrival spectra of the prioritized targets in the partitions. Finally, a moving target is determined according to the moving trajectory. According to the embodiments of the present disclosure, delay-Doppler spectrum calculation is performed for a received signal of each sensing signal period to obtain comprehensive delay-Doppler spectra including angle information, and partitioning, prioritizing, and extraction are performed on the comprehensive delay-Doppler spectra, such that delay-angle-of-arrival spectra of prioritized targets in partitions can be obtained. Because angle information and timing of the targets are recorded in the delay-angle-of-arrival spectra, a moving trajectory and a corresponding moving target can be determined according to change trends of the angle information and the timing corresponding to the targets in the plurality of delay-angle-of-arrival spectra, and the influence of an interference target can be eliminated. Whereby, wireless sensing of a moving target can be accurately realized in a complex environment.

## BRIEF DESCRIPTION OF DRAWINGS

FIG. 1 is a schematic diagram of sensing of people in a ground environment according to an embodiment of the present disclosure;

FIG. 2 is a schematic diagram of sensing of vehicles in a ground environment according to an embodiment of the present disclosure;

FIG. 3 is a schematic diagram of a communication system for implementing a partition trajectory target sensing method according to an embodiment of the present disclosure;

FIG. 4 is a flowchart of a partition trajectory target sensing method according to an embodiment of the present disclosure;

FIG. 5 is a flowchart of a partition trajectory target sensing method according to another embodiment of the present disclosure;

FIG. 6 is a flowchart of a partition trajectory target sensing method according to another embodiment of the present disclosure;

FIG. 7 is a flowchart of a partition trajectory target sensing method according to another embodiment of the present disclosure;

FIG. 8 is a flowchart of a partition trajectory target sensing method according to another embodiment of the present disclosure;

FIG. 9 is a flowchart of a partition trajectory target sensing method according to another embodiment of the present disclosure;

FIG. 10 is a flowchart of a partition trajectory target sensing method according to another embodiment of the present disclosure;

FIG. 11 is a flowchart of a partition trajectory target sensing method according to another embodiment of the present disclosure;

FIG. 12 is a flowchart of a partition trajectory target sensing method according to another embodiment of the present disclosure;

FIG. 13 is a flowchart of a partition trajectory target sensing method according to another embodiment of the present disclosure;

FIG. 14 is a schematic diagram of a relationship among a sensing period, a sensing signal period, and a sensing signal length according to an embodiment of the present disclosure;

FIG. 15 is a schematic diagram of a relationship among a partition width, a sensing signal length, and a sensing signal sampling period according to an embodiment of the present disclosure;

FIG. 16 is a schematic diagram of delay-angle-of-arrival spectra of sensing targets according to an embodiment of the present disclosure;

FIG. 17 is a schematic diagram of delay-angle-of-arrival spectra of sensing targets in a plurality of consecutive sensing periods according to an embodiment of the present disclosure;

FIG. 18 is a schematic diagram of sensing of moving targets based on trajectories obtained through curve fitting according to an embodiment of the present disclosure;

FIG. 19 is a schematic diagram of an implementation scenario in which people walk according to an embodiment of the present disclosure;

FIG. 20 is a schematic diagram of Doppler domain data in an implementation scenario in which people walk according to an embodiment of the present disclosure;

FIG. 21 is a schematic diagram of a trajectory drawn in an implementation scenario in which people walk according to an embodiment of the present disclosure;

FIG. 22 is a schematic diagram of an implementation scenario in which a drone flies according to an embodiment of the present disclosure;

FIG. 23 is a schematic diagram of a trajectory drawn in an implementation scenario in which a drone flies according to an embodiment of the present disclosure; and

FIG. 24 is a schematic structural diagram of a communication device according to an embodiment of the present disclosure.

## DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In the embodiments of the present disclosure, any embodiment or design described following the terms such as "further," "illustrative," and "alternative" is used to indicate examples, explanations, or illustrations, and should not be construed as being superior or advantageous over other embodiments or designs. The use of the terms such as "further," "illustrative," and "alternative" is intended to present the relevant concepts in a concrete manner.

In the related art, the world is currently in the era of the fourth industrial revolution. An important characteristic of the fourth industrial revolution is ubiquitous intelligence. Intelligent technologies have deepened into people's lives and brings great convenience and new experience to people's lives, and have also deepened into various industries, to upgrade the industry through intelligence and improve the efficiency of the industry. The development in both directions will greatly free humans from the constraint of low-level production.

Ubiquitous intelligent technologies mainly include aspects such as ubiquitous sensing technologies, ubiquitous computing technologies, and product development. Therefore, a ubiquitous system is required for ubiquitous intelligence. Currently, among deployed systems, only wireless communication networks satisfy ubiquity. Therefore, implementing ubiquitous sensing and ubiquitous computing through a wireless communication network has become a main feasible technology route.

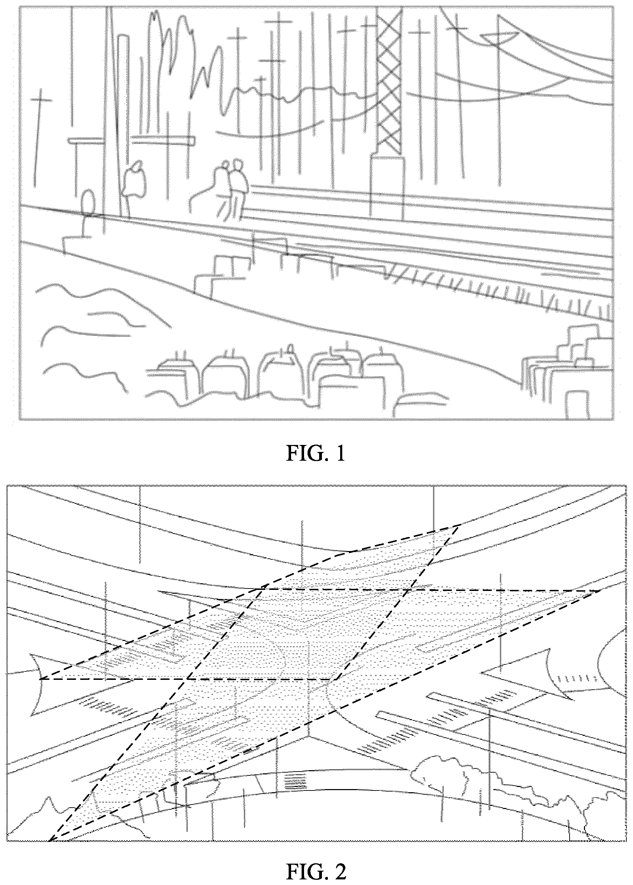

At present, sensing technologies have been extensively studied mainly in the radar field. Currently, application scenarios of radar devices mainly include sensing of airplanes, such as airport radars, and short-range sensing, such as in-vehicle radars. Both the two scenarios are simple scenarios. Ubiquitous sensing requires that sensing can be implemented in various complex scenarios, such as an indoor multipath environment, a ground environment with lots of buildings, an environment with lots of vehicles, a shopping mall environment with lots of people, etc. FIG. 1 is a schematic diagram of sensing of people in a ground environment according to an embodiment of the present disclosure. FIG. 2 is a schematic diagram of sensing of vehicles in a ground environment according to an embodiment of the present disclosure. A shadow area in a dashed area in FIG. 2 represents an area in which an interference sensing signal exists, and it is difficult to accurately identify a moving target and an interference target from the area. There are only a few studies on sensing in complex environments, and there are fewer sensing technologies that can be put into commercial use. Sensing in a complex environment is a research hotspot in both standardization and academic circles and is in its early stage of development.

Wireless sensing technologies differ greatly in different scenarios. For sensing in a lowaltitude environment, such as drone sensing, because the background is empty, generally only an echo signal of a sensing object is received, and the signal is well isolated in terms of distance, angle, and speed, and therefore is easy to separate and identify. However, in a ground environment, there are a large number of various reflectors, and generally there are multiple paths. Mostly, there are at least ten propagation paths. In many cases, energy of a reflected signal in the environment is greater than that of an echo signal of a moving object. A signal of a sensing object on the ground and a signal reflected back from the environment are not highly separated in terms of speed, angle, and distance, and are often mixed together, causing great difficulty to conventional wireless sensing.

In view of the above, the present disclosure provides a partition trajectory target sensing method, a communication device, a computer-readable storage medium, and a computer program product, which can determine a moving target among a plurality of targets in a complex scenario and eliminate the influence of an interference target among the plurality of targets, thereby accurately realizing wireless sensing of a moving target in a complex environment.

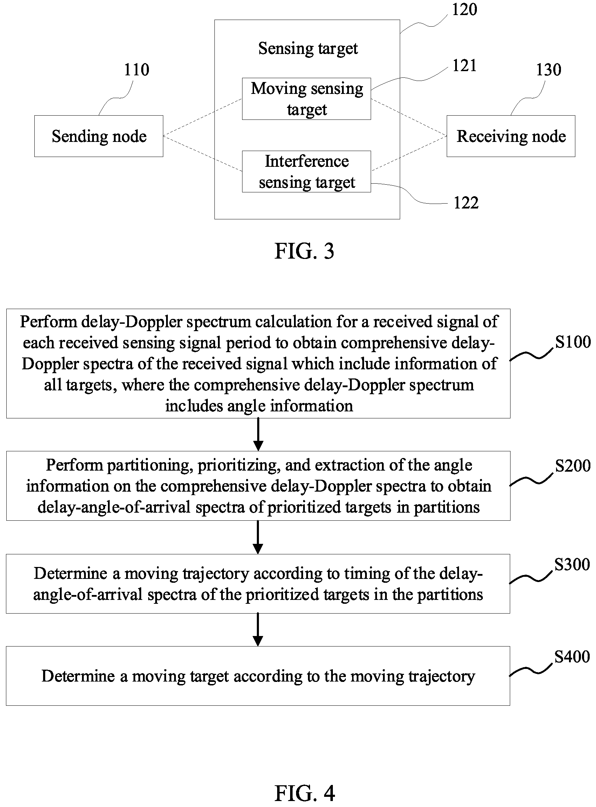

FIG. 3 is a schematic diagram of a communication system for implementing a partition trajectory target sensing method according to an embodiment of the present disclosure. The communication system includes a sending node 110, a sensing target 120, and a receiving node 130. The sensing target 120 includes, but not limited to, a moving sensing target 121 whose position moves over time and an interference sensing target 122 whose position is fixed.

In an embodiment, as shown in FIG. 3, a wireless signal from the sending node 110 is not only directly transmitted to the receiving node 130 through the moving sensing target 121, but also indirectly transmitted to the receiving node 130 through the interference sensing target 122. Alternatively, in an embodiment, a wireless signal from the sending node 110 is not only directly transmitted to the receiving node 130 through the moving sensing target 121, but also indirectly transmitted to the receiving node 130 through the moving sensing target 121 and the interference sensing target 122 in sequence. The means and manner in which the wireless signal between the sending node 110 and the receiving node 130 respectively passes through the moving sensing target 121 and the interference sensing target 122 are not particularly limited in the embodiments of the present disclosure.

In the technical scheme of the embodiments of the present disclosure, the number of moving sensing targets 121 may be one or more, and the number of interference sensing targets 122 may be one or more. The number of moving sensing targets 121 and the number of interference sensing targets 122 are not particularly limited in the embodiments of the present disclosure.

The technical scheme of the embodiments of the present disclosure may be applied to various communication systems, such as a Wideband Code Division Multiple Access (WCDMA) mobile communication system, an Evolved Universal Terrestrial Radio Access Network (E-UTRAN) system, a Next Generation Radio Access Network (NG-RAN) system, a Long Term Evolution (LTE) system, a Worldwide Interoperability for Microwave Access (WiMAX) communication system, a 5th generation (5G) system such as New Radio (NR) access technology, and future communication systems such as a 6th generation (6G) system.

The technical scheme of the embodiments of the present disclosure may be applied to various communication technologies, such as microwave communication, light wave communication, millimeter wave communication, etc. The specific technology and the specific equipment form used by the receiving node are not limited in the embodiments of the present disclosure.

In an embodiment of the present disclosure, the sending node 110 may be an evolved NodeB (eNB), a Transmission Reception Point (TRP), a Next Generation NodeB (gNB) in an NR system, a base station in other future mobile communication systems, or a sending node in a Wireless Fidelity (Wi-Fi) system, etc. The specific technology and the specific equipment form used by the sending node are not limited in the embodiments of the present disclosure.

In an embodiment of the present disclosure, the moving sensing target 121 is an entity on the user side for receiving or transmitting signals, such as a mobile phone. The entity may also be referred to as a terminal device, a User Equipment (UE), a Mobile Station (MS), a Mobile Terminal (MT), etc. The terminal device may be a vehicle having a communication function, an intelligent vehicle, a mobile phone, a wearable device, a tablet computer (Pad), a computer with a wireless transceiver function, a Virtual Reality (VR) terminal device, an Augmented Reality (AR) terminal device, a wireless terminal device in industrial control, a wireless terminal device in self-driving, a wireless terminal device in transportation safety, a wireless terminal device in smart city, etc. The specific technology and the specific equipment form used by the moving sensing target are not limited in the embodiments of the present disclosure.

In an embodiment of the present disclosure, the receiving node 130 may be an eNB, a TRP, a gNB in an NR system, a base station in other future mobile communication systems, or a sending node in a Wi-Fi system, etc. The specific technology and the specific equipment form used by the receiving node are not limited in the embodiments of the present disclosure.

Based on the communication system of any one of the above environments, embodiments of the partition trajectory target sensing method of the present disclosure are proposed below.

FIG. 4 is a flowchart of a partition trajectory target sensing method according to an embodiment of the present disclosure. The partition trajectory target sensing method may include, but not limited to, the following steps S100, S200, S300, and S400.

At S100, delay-Doppler spectrum calculation is performed for a received signal of each sensing signal period to obtain comprehensive delay-Doppler spectra of the received signal which include information of all targets, where the comprehensive delay-Doppler spectrum includes angle information.

At S200, partitioning, prioritizing, and extraction of the angle information are performed on the comprehensive delay-Doppler spectra to obtain delay-angle-of-arrival spectra of prioritized targets in partitions.

At S300, a moving trajectory is determined according to timing of the delay-angle-of-arrival spectra of the prioritized targets in the partitions.

At S400, a moving target is determined according to the moving trajectory.

According to an embodiment of the present disclosure, delay-Doppler spectrum calculation is performed for a received signal of each sensing signal period to obtain comprehensive delay-Doppler spectra including angle information, and partitioning, prioritizing, and extraction are performed on the comprehensive delay-Doppler spectra, such that delay-angle-of-arrival spectra of prioritized targets in partitions can be obtained. Because angle information and timing of the targets are recorded in the delay-angle-of-arrival spectra, a moving trajectory and a corresponding moving target can be determined according to change trends of the angle information and the timing corresponding to the targets in the plurality of delay-angle-of-arrival spectra, and the influence of an interference target can be eliminated. Whereby, wireless sensing of a moving target can be accurately realized in a complex environment.

In an embodiment, the number of sensing signal periods is more than one, and each sensing signal period includes at least one received signal. The number of sensing signal periods and the number of received signals are not particularly limited in the embodiments of the present disclosure.

In an embodiment, the comprehensive delay-Doppler spectrum corresponds to the information of all the targets, while the delay-angle-of-arrival spectra of the prioritized targets in the partitions, which are obtained through partitioning processing and prioritizing processing, correspond to information of part of the targets. The information of part of the targets is information of targets obtained through screening, including, but not limited to, information of a moving target obtained through screening and information of an interference target obtained through screening.

In an embodiment of the present disclosure, one or more moving trajectories may be derived according to the timing of the plurality of delay-angle-of-arrival spectra. Because the position of the moving target changes with time, the timing of the moving target in the plurality of delay-angle-of-arrival spectra also changes accordingly. Therefore, in the embodiment of the present disclosure, the moving trajectory of the moving target can be obtained according to the timing of the plurality of delay-angle-of-arrival spectra. Each moving trajectory corresponds to one moving target, and if there are a plurality of moving trajectories, it indicates that there are a plurality of moving targets.

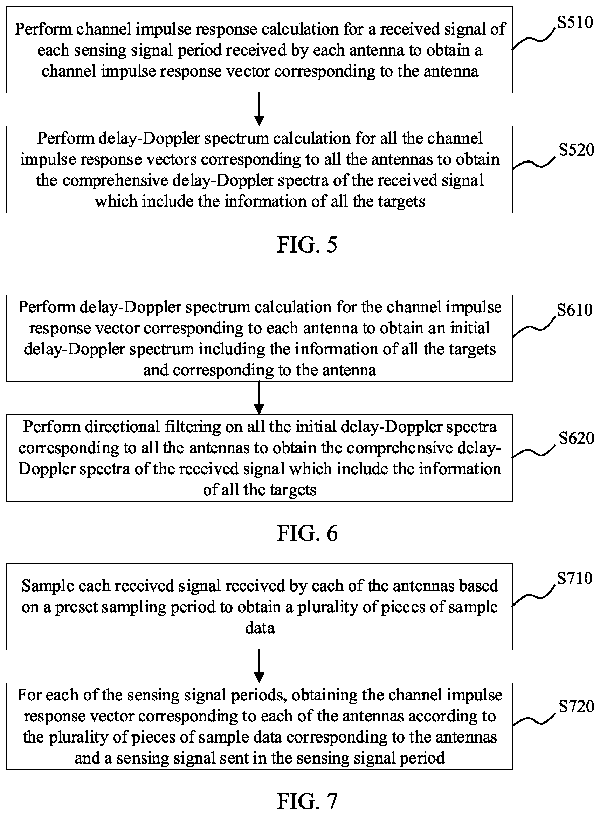

FIG. 5 is a flowchart of a partition trajectory target sensing method according to another embodiment of the present disclosure. Performing delay-Doppler spectrum calculation for a received signal of each sensing signal period to obtain comprehensive delay-Doppler spectra of the received signal which include information of all targets in S100 includes, but not limited to, the following steps S510 and S520.

At S510, channel impulse response calculation is performed for a received signal of each sensing signal period received by each antenna to obtain a channel impulse response vector corresponding to the antenna.

At S520, delay-Doppler spectrum calculation is performed for all the channel impulse response vectors corresponding to all the antennas to obtain the comprehensive delay-Doppler spectra of the received signal which include the information of all the targets.

In an embodiment of the present disclosure, the channel impulse response vectors corresponding to the antennas need to be calculated first, and then delay-Doppler spectrum calculation is performed based on all the channel impulse response vectors corresponding to all the antennas to obtain the comprehensive delay-Doppler spectra.

In an embodiment, there may be one or more antennas in the embodiments of the present disclosure. The number of antennas is not particularly limited in the embodiments of the present disclosure.

FIG. 6 is a flowchart of a partition trajectory target sensing method according to another embodiment of the present disclosure. Performing delay-Doppler spectrum calculation for all the channel impulse response vectors corresponding to all the antennas to obtain the comprehensive delay-Doppler spectra of the received signal which include the information of all the targets in S520 includes, but not limited to, the following steps S610 and S620.

At S610, delay-Doppler spectrum calculation is performed for the channel impulse response vector corresponding to each antenna to obtain an initial delay-Doppler spectrum including the information of all the targets and corresponding to the antenna.

At S620, directional filtering is performed on all the initial delay-Doppler spectra corresponding to all the antennas to obtain the comprehensive delay-Doppler spectra of the received signal which include the information of all the targets.

In an embodiment of the present disclosure, an initial delay-Doppler spectrum including the information of all the targets and corresponding to each antenna may be calculated first, and then based on different orientations and directions, directional filtering is performed on all the initial delay-Doppler spectra corresponding to all the antennas to obtain the comprehensive delay-Doppler spectra of the received signal which include the information of all the targets.

FIG. 7 is a flowchart of a partition trajectory target sensing method according to another embodiment of the present disclosure. Performing channel impulse response calculation for a received signal of each sensing signal period received by each antenna to obtain a channel impulse response vector corresponding to each antenna in S510 includes, but not limited to, the following steps S710 and S720.

At S710, each received signal received by each of the antennas is sampled based on a preset sampling period to obtain a plurality of pieces of sample data.

At S720, for each sensing signal period, the channel impulse response vector corresponding to each of the antennas is obtained according to the plurality of pieces of sample data corresponding to the antennas and a sensing signal sent in the sensing signal period.

In an embodiment of the present disclosure, the channel impulse response vector corresponding to each antenna may be calculated by a sampling method, including: first, sampling each received signal received by each of the antennas based on a time length of a preset sampling period to obtain a plurality of pieces of sample data, and obtaining the channel impulse response vector corresponding to each of the antennas according to the plurality of pieces of sample data and a sensing signal sent in the sensing signal period.

The preset sampling period in an embodiment of the present disclosure may be set in advance. The specific time length of the preset sampling period is not particularly limited in the embodiments of the present disclosure.

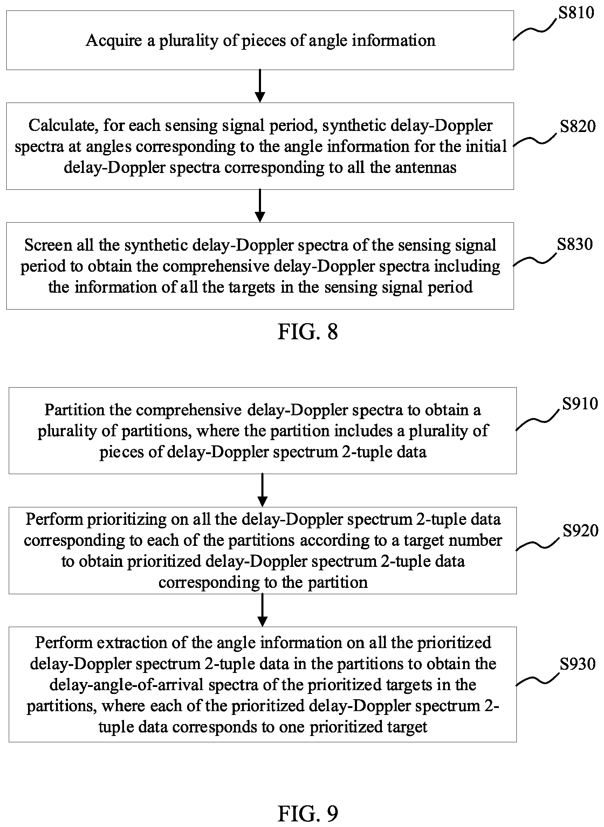

FIG. 8 is a flowchart of a partition trajectory target sensing method according to another embodiment of the present disclosure. Performing directional filtering on all the initial delay-Doppler spectra corresponding to all the antennas to obtain the comprehensive delay-Doppler spectra of the received signal which include the information of all the targets in S620 includes, but not limited to, the following steps S810, S820, and S830.

At S810, a plurality of pieces of angle information are acquired.

At S820, for each sensing signal period, synthetic delay-Doppler spectra at angles corresponding to the angle information are calculated for the initial delay-Doppler spectra corresponding to all the antennas.

At S830, all the synthetic delay-Doppler spectra of the sensing signal period are screened to obtain the comprehensive delay-Doppler spectra including the information of all the targets in the sensing signal period.

In an embodiment, the directional filtering includes: in each sensing signal period, calculating a synthetic delay-Doppler spectrum of the initial delay-Doppler spectra of all the antennas for the angle corresponding to each piece of angle information; and then screening all the synthetic delay-Doppler spectra of the sensing signal period according to amplitude values to obtain the comprehensive delay-Doppler spectra including the information of all the targets in the sensing signal period.

In an embodiment, the angle information may include angle information in a horizontal direction, angle information in a vertical direction, or angle information in both the horizontal direction and the vertical direction. The type of angle information is not particularly limited in the embodiments of the present disclosure.

In an embodiment, each delay-Doppler spectrum 2-tuple data in the comprehensive delay-Doppler spectrum is delay-Doppler spectrum 2-tuple data corresponding to a maximum amplitude in the synthetic delay-Doppler spectra corresponding to all the angles.

In an embodiment, in addition to the delay-Doppler spectrum 2-tuple data with the maximum amplitude, each delay-Doppler spectrum 2-tuple data in the comprehensive delay-Doppler spectrum may also be delay-Doppler spectrum 2-tuple data with the second largest amplitude or delay-Doppler spectrum 2-tuple data with other amplitude values. The amplitude value of the delay-Doppler spectrum 2-tuple data is not particularly limited in the embodiments of the present disclosure.

FIG. 9 is a flowchart of a partition trajectory target sensing method according to another embodiment of the present disclosure. Performing partitioning, prioritizing, and extraction of the angle information on the comprehensive delay-Doppler spectra to obtain delay-angle-of-arrival spectra of prioritized targets in partitions in S200 includes, but not limited to, the following steps S910, S920, and S930.

At S910, the comprehensive delay-Doppler spectra are partitioned to obtain a plurality of partitions, where the partition includes a plurality of pieces of delay-Doppler spectrum 2-tuple data.

At S920, prioritizing is performed on all the delay-Doppler spectrum 2-tuple data corresponding to each of the partitions according to a target number to obtain prioritized delay-Doppler spectrum 2-tuple data corresponding to the partition.

At S930, extraction of the angle information is performed on all the prioritized delay-Doppler spectrum 2-tuple data in the partitions to obtain the delay-angle-of-arrival spectra of the prioritized targets in the partitions, where each of the prioritized delay-Doppler spectrum 2-tuple data corresponds to one prioritized target.

In an embodiment of the present disclosure, the comprehensive delay-Doppler spectra are partitioned, a target number of pieces of delay-Doppler spectrum 2-tuple data are prioritized from each partition, and then angle information is extracted from the prioritized delay-Doppler spectrum 2-tuple data. The delay-angle-of-arrival spectra of the prioritized targets in the partitions are generated.

In an embodiment, the target number may be one or more, which is not particularly limited in the embodiments of the present disclosure.

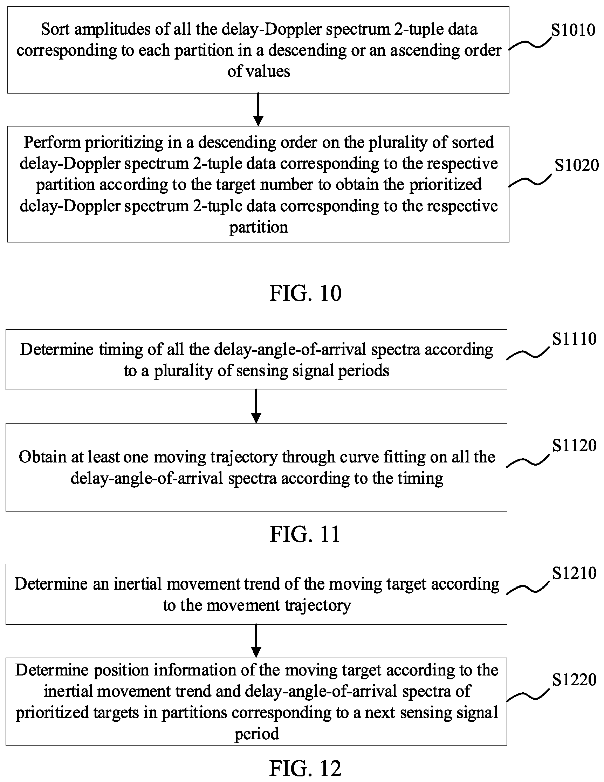

FIG. 10 is a flowchart of a partition trajectory target sensing method according to another embodiment of the present disclosure. Performing prioritizing on all the delay-Doppler spectrum 2-tuple data corresponding to each of the partitions according to a target number to obtain prioritized delay-Doppler spectrum 2-tuple data corresponding to the partition in S920 includes, but not limited to, the following steps S1010 and S1020.

At S 1010, amplitudes of all the delay-Doppler spectrum 2-tuple data corresponding to each partition are sorted in a descending or an ascending order of values.

At S1020, prioritizing in a descending order is performed on the plurality of sorted delay-Doppler spectrum 2-tuple data corresponding to the respective partition according to the target number to obtain the prioritized delay-Doppler spectrum 2-tuple data corresponding to the respective partition.

In an embodiment of the present disclosure, the target number of pieces of delay-Doppler spectrum 2-tuple data with the highest numerical values may be selected as the prioritized delay-Doppler spectrum 2-tuple data corresponding to each partition.

FIG. 11 is a flowchart of a partition trajectory target sensing method according to another embodiment of the present disclosure. Determining a moving trajectory according to timing of the delay-angle-of-arrival spectra of the prioritized targets in the partitions in S300 includes, but not limited to, the following steps S1110 and S1120.

At S1110, timing of all the delay-angle-of-arrival spectra is determined according to a plurality of sensing signal periods.

At S1120, at least one moving trajectory is obtained through curve fitting on all the delay-angle-of-arrival spectra according to the timing.

In an embodiment of the present disclosure, curve fitting may be performed according to the timing of the plurality of delay-angle-of-arrival spectra to obtain one or more moving trajectories. Because the position of the moving target changes with time, the timing of the moving target in the plurality of delay-angle-of-arrival spectra also changes accordingly. Therefore, in the embodiment of the present disclosure, the moving trajectory of the moving target can be obtained according to the timing of the plurality of delay-angle-of-arrival spectra. Each moving trajectory corresponds to one moving target, and if there are a plurality of moving trajectories, it indicates that there are a plurality of moving targets.

FIG. 12 is a flowchart of a partition trajectory target sensing method according to another embodiment of the present disclosure. After determining a moving target according to the moving trajectory in S400, the partition trajectory target sensing method further includes, but not limited to, the following steps S1210 and S1220.

At S1210, an inertial movement trend of the moving target is determined according to the movement trajectory.

At S1220, position information of the moving target is determined according to the inertial movement trend and delay-angle-of-arrival spectra of prioritized targets in partitions corresponding to a next sensing signal period.

In an embodiment of the present disclosure, a future inertial movement trend of the moving target can be estimated according to the movement trajectory, so the position information of the moving target can be preferentially determined from the delay-angle-of-arrival spectra of prioritized targets in partition corresponding to a next sensing signal period.

The inertial movement trend of the moving target in an embodiment of the present disclosure may be a position to which the moving target is about to reach or a trajectory along which the moving target is about to move.

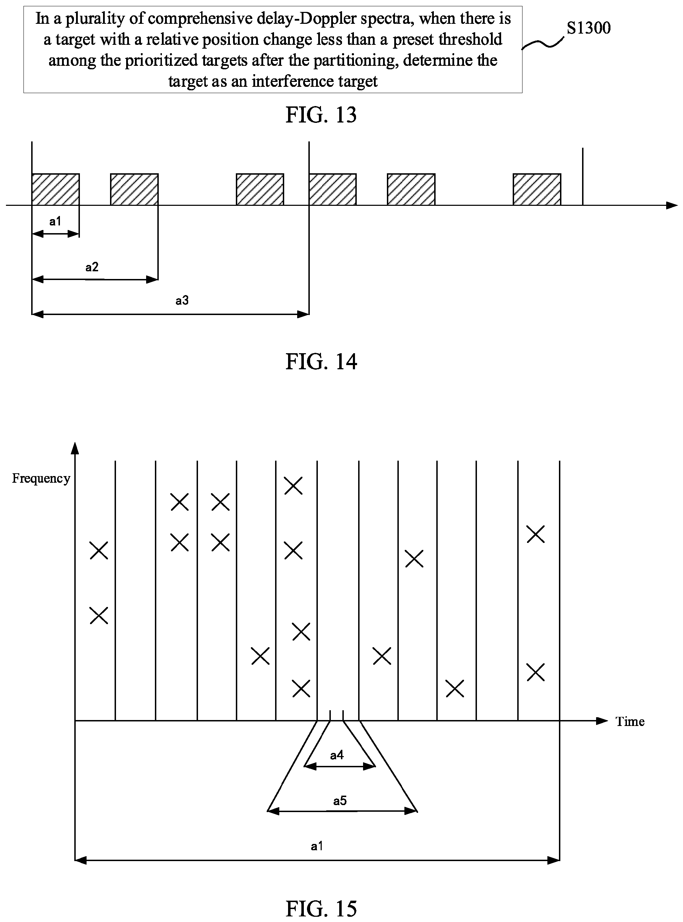

FIG. 13 is a flowchart of a partition trajectory target sensing method according to another embodiment of the present disclosure. After obtaining at least one moving trajectory in S1120, the partition trajectory target sensing method further includes, but not limited to, a following step S1300.

At S1300, in a plurality of comprehensive delay-Doppler spectra, when there is a target with a relative position change less than a preset threshold among the prioritized targets after the partitioning, the target is determined as an interference target.

In an embodiment, if there is a target with a relative position change less than a preset threshold among the prioritized targets after the partitioning, indicating that the position of the target has not changed with time, the target may be determined as an interference target.

Based on the partition trajectory target sensing method of any one of the above embodiments, specific embodiments of the partition trajectory target sensing method of the present disclosure are proposed below.

In an embodiment, the partition trajectory target sensing method includes, but not limited to, the following steps.

At step one, a sensing signal transmitting base station follows a sensing period a3, and transmits a sensing signal S on a set radio resource according to a sensing signal period a2 within a3.

At step two, a sensing signal receiving base station receives a current sensing signal y of a current sensing period z. A signal $R_{m.n}(t)$ of each receiving antenna is sampled according to a sampling period a4, and is continuously sampled within a symbol duration a1 to form sample data of one symbol: $R_{m.n}(i,y)$, $i \in [0,a1/a4)$, where m and n represent serial numbers of antenna elements in an antenna array, $m \in [0, M - 1]$, $n \in [0, N - 1]$; and y represents a serial number of the current received sensing signal period, where $y \in [0,a3/a2)$. A relationship among a sensing period, a sensing signal period, and a sensing signal length is shown in FIG. 14.

A received signal of each antenna is sampled, and a channel impulse response vector $c_{m.n}(i,y)$ of each antenna is obtained according to the transmitted signal s.

At step three, in the current sensing period z, delay-Doppler spectra $d_{m.n}(i,x)$ of the current sensing period are calculated for channel impulse responses of all received sensing signals (y being 0 to a3/a2-1), where i represents a serial number of the sample, x represents a Doppler frequency, and $x \in [0, a3/a2)$.

At step four, directional filtering is performed on all $d_{m.n}(i,x)$ to obtain a maximum delay-Doppler spectrum $M(i, x)$, and an angle corresponding to each (i, x) is recorded. The value of $M(i, x)$ is a maximum amplitude value in all directions of filtering, which is used as the value of $M(i,x)$, and an angle corresponding to the maximum amplitude value is an angle corresponding to $M(i, x)$.

At step five, $M(i, x)$ is partitioned according to a delay partition width a5, where the number of targets detected in each partition is defined as K. From all (i, x) in each partition of $M(i,x)$ of the current sensing period z, 2-tuples corresponding to the top k largest peaks are used as k sensing targets in the partition. For example, a k1[th] largest target to a k2[th] largest target are selected, where k2-k1=K. A relationship among a partition width, a sensing signal length, and a sensing signal sampling period is shown in FIG. 15.

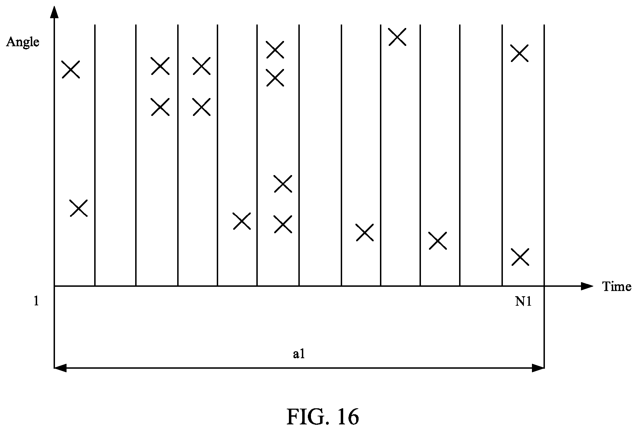

There are a total of k*a1/a5 targets in all the partitions. According to angles and delay sample serial numbers corresponding to all sensing targets, delay-angle-of-arrival spectra $P_z(i,\beta)$ of the sensing targets in this sensing period are formed. There are k*a1/a5 targets in the spectrum, and positions where there is no target are assigned a value of 0. Delay-angle-of-arrival spectra of sensing targets are shown in FIG. 16.

The delay-angle-of-arrival spectra of the sensing targets in this period may be sent to a sensing server.

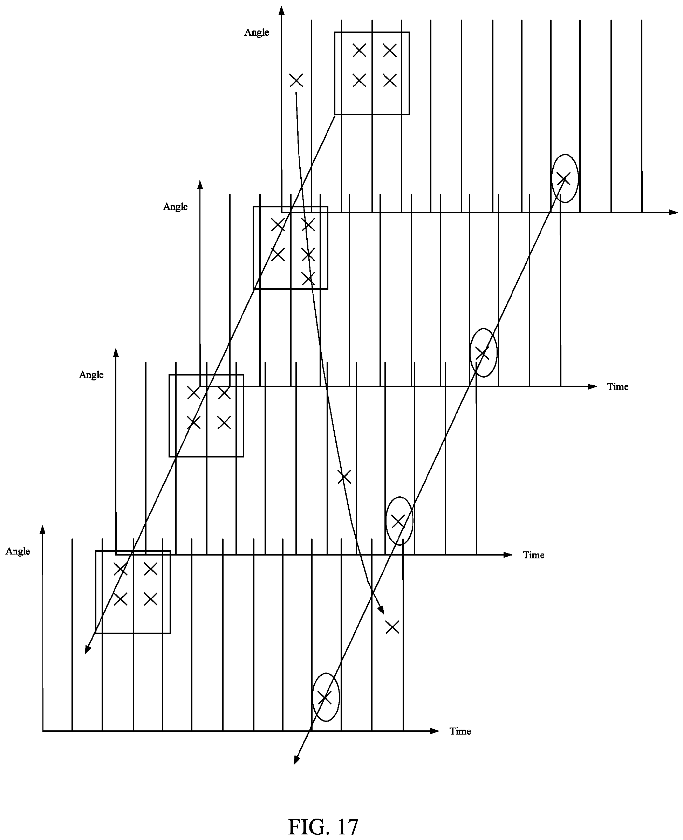

At step six, the steps one to five are cyclically performed to form delay-angle-of-arrival spectra $P_{z+1}(i,\beta)$ of sensing targets in a next sensing period. This step is continuously performed to obtain delay-angle-of-arrival spectra of sensing targets in consecutive sensing periods. Delay-angle-of-arrival spectra of sensing targets in a plurality of consecutive sensing periods are shown in FIG. 17.

At step seven, curve fitting is performed on the delay-angle-of-arrival spectra of the consecutive periods, and according to the fitting curve, the number of sensing objects is determined, the moving trajectory of each sensing object is determined, and an interval of an interference area is determined.

A smooth and continuous curve can be formed, i.e., determined as one moving sensing target. A plurality of smooth and continuous curves are determined as a plurality of moving sensing targets.

A sensing target area with relatively fixed angle and delay is determined as the interference area.

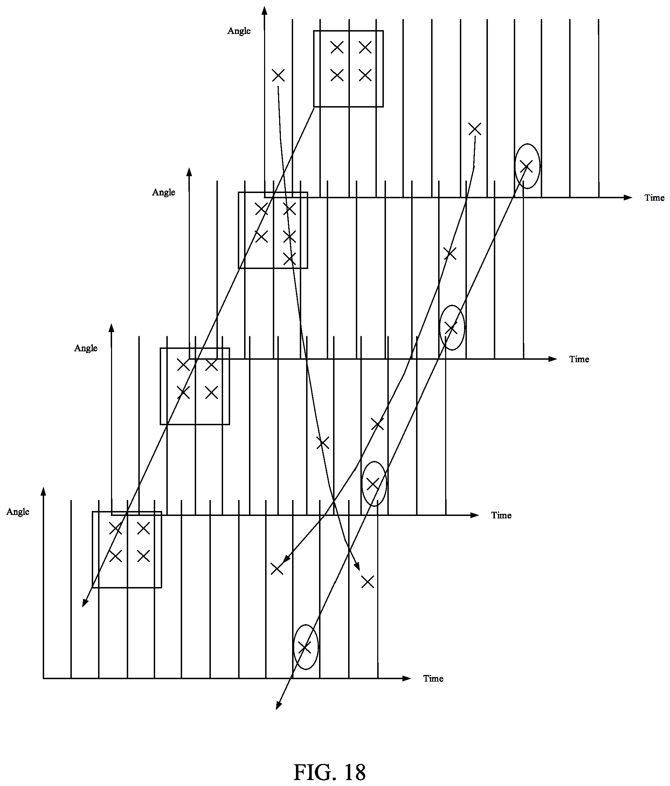

Curve fitting may be implemented by the sensing server. Sensing of moving targets based on trajectories obtained through curve fitting is schematically shown in FIG. 18.

At step eight, according to an inertial trend determined by the moving trajectory of the sensing target, a current position of the sensing target is preferentially determined from a delay-angle-of-arrival spectra of the sensing target in a subsequent sensing period.

Some of the above steps one to eight are respectively described in detail below.

That "a received signal of each antenna is sampled, and a channel impulse response vector $c_{m.n}(i,y)$ of each antenna is obtained according to the transmitted signal s" in step two includes that:
the sampled data of each antenna is transformed to frequency domain, and then a frequency-domain impulse response of each antenna is obtained by dividing received data of subcarriers by transmitted subcarrier signals. Then, the frequency-domain impulse response is transformed to time domain to obtain a time-domain impulse response.

In addition, "calculating delay-Doppler spectra of the current sensing period" in step three includes:
after obtaining time-domain impulse responses of all sensing signals in a sensing period of each antenna, starting from a delay sample serial number of 0, respectively taking values of the same delay sample serial number from the channel impulse responses of all the sensing signals in the current sensing period, and then performing a Fourier transform to obtain the delay-Doppler spectra of the current sensing period.

$[d_{m.n}(i,0)..d_{m.n}(i,x)..d_{m.n}(i,a3/a2)] = FFT([c_{m.n}(i,0),c_{m.n}(i,1)..c_{m.n}(i,a3/a2)])$, where i represents the delay sample serial number, x represents a Doppler frequency, and $x \in [0,a3/a2)$.

In addition, that "directional filtering is performed on all $d_{m.n}(i, x)$ to obtain a maximum delay-Doppler spectrum $M(i, x)$, and an angle corresponding to each (i, x) is recorded" in step four includes:
performing directional filtering in an azimuth range of $[\theta1, \theta2]$ with a step size of $\Delta\theta$, and in a pitch range of $[\beta1, \beta2]$ with a step size of $\Delta\beta$:

$$d(i,x,j1,j2) = \sum_{m,n} d_{m,n}(i,x) * g_{m,n}(\theta1 + j1 * \Delta\theta, \beta1 + j2 * \Delta\beta)$$

$$M(i,x) = \max_{j1,j2}(d(i,x,j1,j2)).$$

The angle corresponding to the maximum value is used as the angle corresponding to m (i, x). The determined maximum value is used as the amplitude of m (i, x).

In addition, the "top k largest peaks" in step five means: sorting amplitudes corresponding to all (i, x) 2-tuples in the partitions of $M(i,x)$ in a descending order, and selecting the first k 2-tuples as the sensing targets.

Compared with existing technologies, the technical scheme of the above steps one to eight can solve problems in a complex environment such as large sensing error caused by interference, mutual interference between the environment and the sensing target, and mutual interference between multiple targets can be solved, and the embodiments of the present disclosure can finally realize sensing of multiple targets and an interference interval in a complex environment through trajectory sensing.

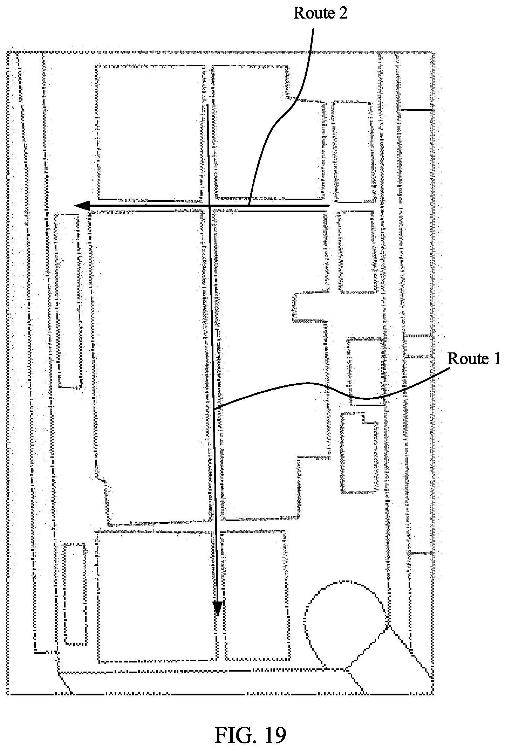

In another embodiment, an implementation scenario of multi-object sensing is as follows: the sensing signal transmission period is 5 ms, the frequency is 4.9 GHz, and in an area of 160 m long and 90 m wide, there are two test routes 1 and 2 perpendicular to each other, along which two testers (targets) respectively walk, as shown in FIG. 19.

Correspondingly, a processing procedure of this embodiment is as follows.

The Linear Frequency Modulation (LFM) sensing signal transmission period is 5 ms and the bandwidth is 100 M.

8*4 antenna elements form an array of p=8 by q=4. The sampling frequency is 122.88 MHz. Sampling data of one symbol is defined as $R(n)$, $n \in [1, 4096]$. According to the transmitted signal s, channel impulse vectors $c_{p,q}(n)$ are obtained using the following formula:

$$c_{p,q}(n) = IFFT\{FFT[R(n)]/FFT[s(n)]\}.$$

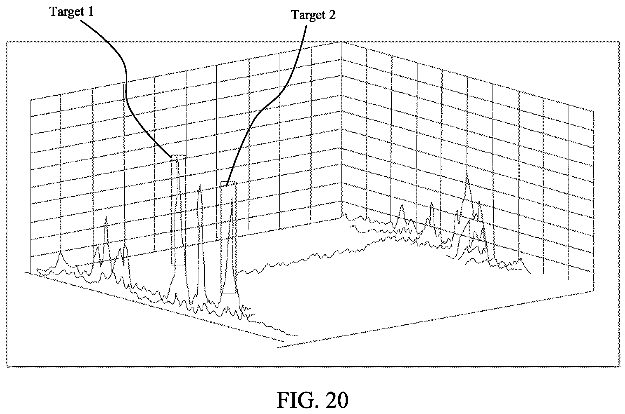

Acquisition of Doppler domain data: Within 500 ms, channel impulses of 100 pieces of sensing symbol data are obtained. For each $n \in [1, 4096]$, one piece of sensing data is extracted per symbol impulse, so as to construct a sensing data vector with a length of 100. A Fourier transform is performed based on $d_{p,q}(i,x) = FFT[c_{p,q}(n)]$, to obtain Doppler domain data, as shown in FIG. 20.

Angle calculation: Spatial domain filtering is performed in a range of -90° to 90° in the horizontal direction and -90° to 90° in the vertical direction. For each angle, a steering vector is constructed. Inner products of the steering vectors and the Doppler domain data of the 32 antenna elements are calculated and summed to obtain $M_{m.n}(i,x)$. A maximum horizontal angle and a maximum vertical angle of $M_{m.n}(i,x)$ are the incoming direction of the signal.

Distance calculation: For the Doppler domain data $M_{m.n}(i,x)$, the distance range is 0 to 4096 Ts, the frequency range is 0 to 200 Hz, m=8 is defined as a time partition width, and k=4 is defined as the number of targets detected. In the range of 0 to 4096 Ts, every m Ts is used as one interval. k maximum Doppler amplitude data are searched in this interval, and a value of the distance T is recorded. A corresponding angle value is determined according to 4. As such, a distance and angle sensing result of the first second is obtained.

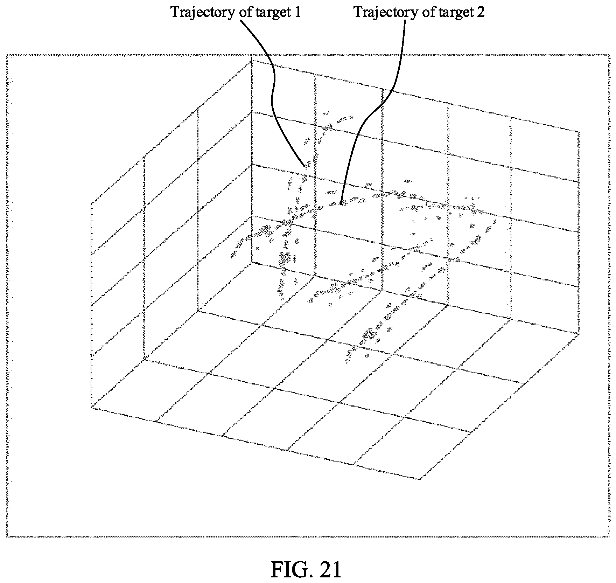

Drawing a trajectory: The above steps are repeated to obtain a sensing result of 1 minute and a trajectory is drawn, as shown in FIG. 21.

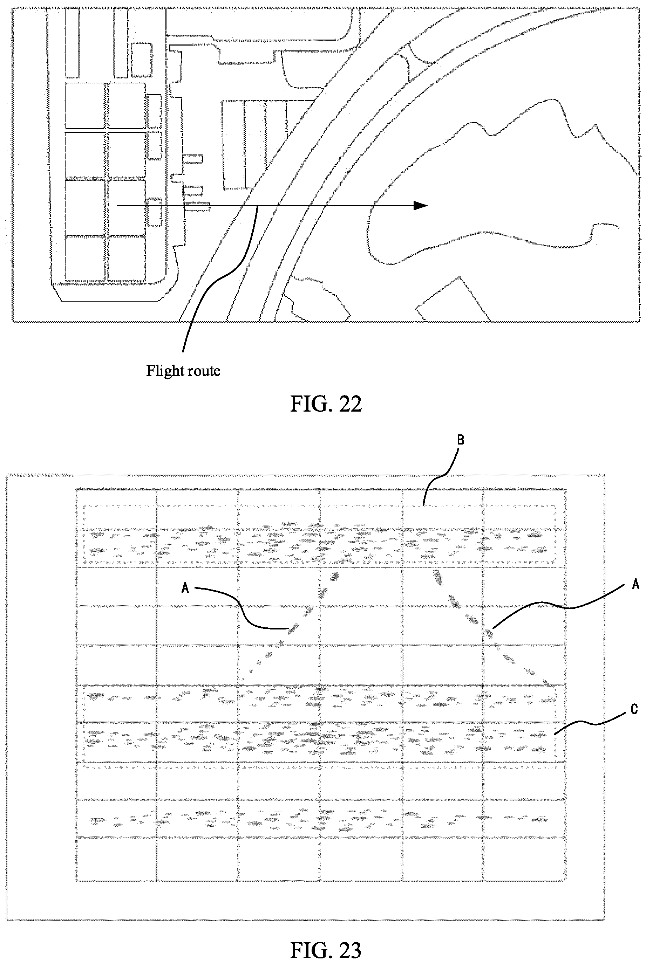

In another embodiment, an implementation scenario of an interference area is as follows. The sensing signal transmission period is 5 ms. The frequency is 4.9 GHz. A flight route of a drone has to pass through two interference areas, namely, an area subject to interference caused by the operation of a fan blower nearby and an area subject to interference caused by the shaking of leaves on a distant tree. The flight route is shown in FIG. 22.

Correspondingly, a processing procedure of this embodiment is as follows.

The LFM sensing signal transmission period is 5 ms and the bandwidth is 100 M.

8*4 antenna elements form an array of p=8 by q=4. The sampling frequency is 122.88 MHz. Sampling data of one symbol is defined as $R(n)$, $n \in [1, 4096]$. According to the transmitted signal s, channel impulse vectors $c_{p,q}(n)$ are obtained using the following formula:

$$c_{p,q}(n) = IFFT\{FFT[R(n)]/FFT[s(n)]\}.$$

Acquisition of Doppler domain data: Within 500 ms, channel impulses of 100 pieces of sensing symbol data are obtained. For each $n \in [1, 4096]$, one piece of sensing data is extracted per symbol impulse, so as to construct a sensing data vector with a length of 100. A Fourier transform is performed based on $d_{p,q}(i,x) = FFT[c_{p,q}(n)]$, to obtain Doppler domain data.

Angle calculation: Spatial domain filtering is performed in a range of 40° to 80° in the horizontal direction and 0° to 20° in the vertical direction. For each angle, a steering vector is constructed. Inner products of the steering vectors and the Doppler domain data of the 32 antenna elements are calculated and summed to obtain $M_{m.n}(i,x)$. A maximum horizontal angle and a maximum vertical angle of $M_{m.n}(i,x)$ are the incoming direction of the signal.

Distance calculation: For the Doppler domain data $M_{m.n}(i,x)$, the distance range is 0 to 4096 Ts, the frequency range is 0 to 200 Hz, m=9 is defined as a time partition width, and k=3 is defined as the number of targets detected. In the range of 0 to 4096 Ts, every m Ts is used as one interval. k maximum Doppler amplitude data are searched in this interval, and a value of the distance T is recorded. A corresponding angle value is determined according to 4. As such, a distance and angle sensing result of the first second is obtained.

Drawing a trajectory: The above steps are repeated to obtain a sensing result of 1 minute and a trajectory is drawn, as shown in FIG. 23. The trajectory diagram clearly shows a trajectory A of the drone and two interference areas, where area B is an area subject to interference by distant leaves, and area C is an area subject to interference by a fan blower nearby.

Based on the partition trajectory target sensing method of any one of the above embodiments, embodiments of the communication device, the computer-readable storage medium, and the computer program product of the present disclosure are provided below.

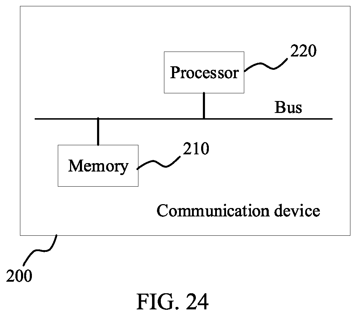

FIG. 24 is a schematic structural diagram of a communication device according to an embodiment of the present disclosure. As shown in FIG. 24, the communication device 200 includes a memory 210 and a processor 220. The device may include one or more memories 210 and one or more processors 220. FIG. 24 uses one memory 210 and one processor 220 as an example. The memory 210 and the processor 220 may be connected by a bus or in other ways. Connection by a bus is used as an example in FIG. 24.

The memory 210, as a computer-readable storage medium, may be configured for storing a software program, a computer-executable program, and modules, for example, program instructions/modules corresponding to the partition trajectory target sensing method provided in any embodiment of the present disclosure. The processor 220 runs the software program, instructions, and modules stored in the memory 210, to implement the partition trajectory target sensing method.

The memory 210 may mainly include a program storage area and a data storage area. The program storage area may store an operating system, and an application required by at least one function. In addition, the memory 210 may include a high-speed random access memory, and may also include a nonvolatile memory, e.g., at least one magnetic disk storage device, flash memory device, or other nonvolatile solid-state storage device. In some examples, the memory 210 may further include memories located remotely from the processor 220, and the remote memories may be connected to the device via a network. Examples of the network include, but not limited to, the Internet, an intranet, a local area network, a mobile communication network, and combinations thereof.

An embodiment of the present disclosure provides a computer-readable storage medium, storing a computer-executable instruction which, when executed by a processor, causes the processor to implement the partition trajectory target sensing method provided in any embodiment of the present disclosure.

An embodiment of the present disclosure provides a computer program product, including a computer program or computer instructions stored in a computer-readable storage medium, where the computer program or computer instructions, when read from the computer-readable storage medium and executed by a processor of a computer device, causes the computer device to implement the partition trajectory target sensing method provided in any embodiment of the present disclosure.

The system architecture and application scenarios described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art may know that with the evolution of the system architecture and the emergence of new application scenarios, the technical schemes provided in the embodiments of the present disclosure are also applicable to similar technical problems.

Those having ordinary skills in the art can understand that all or some of the steps in the methods disclosed above and the functional modules/units in the system and the apparatus can be implemented as software, firmware, hardware, and appropriate combinations thereof.

In a hardware implementation, the division of the functional modules/units mentioned in the above description does not necessarily correspond to the division of physical components. For example, one physical component may have multiple functions, or one function or step may be jointly executed by several physical components. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a compact disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

As used in this specification, the terms "component," "module," "system," and the like are used to denote computer-related entities, hardware, firmware, a combination of hardware and software, software, or software in execution. For example, a component may be, but not limited to, a process running on a processor, a processor, an object, an executable file, a thread of execution, a program, or a computer. An application running on a computing device and the computing device may both be illustrated as components. One or more components may reside in a process or thread of execution. A component may be located on one computer or distributed on two or more computers. In addition, the components may be executed from various computer-readable media having various data structures stored therein. The components may communicate via local and/or remote processes such as in accordance with a signal having one or more data packets (e.g., data from one component interacting with another component in a local system, distributed system, and/or across a network such as the Internet with other systems via the signal).

**Claims**

1. A partition trajectory target sensing method, comprising:

    performing delay-Doppler spectrum calculation for a received signal of each sensing signal period to obtain comprehensive delay-Doppler spectra of the received signal which comprise information of all targets, wherein the comprehensive delay-Doppler spectrum comprises angle information;
    performing partitioning, prioritizing, and extraction of the angle information on the comprehensive delay-Doppler spectra to obtain delay-angle-of-arrival spectra of prioritized targets in the partitions;
    determining a moving trajectory according to timing of the delay-angle-of-arrival spectra of the prioritized targets in the partitions; and
    determining a moving target according to the moving trajectory.

2. The method of claim 1, wherein performing delay-Doppler spectrum calculation for a received signal of each sensing signal period to obtain comprehensive delay-Doppler spectra of the received signal which comprise information of all targets comprises:

    performing channel impulse response calculation for a received signal of each sensing signal period received by each antenna to obtain a channel impulse response vector corresponding to the antenna; and
    performing delay-Doppler spectrum calculation for all the channel impulse response vectors corresponding to all the antennas to obtain the comprehensive delay-Doppler spectra of the received signal which comprise the information of all the targets.

3. The method of claim 2, wherein performing delay-Doppler spectrum calculation for all the channel impulse response vectors corresponding to all the antennas to obtain the comprehensive delay-Doppler spectra of the received signal which comprise the information of all the targets comprises:

    performing delay-Doppler spectrum calculation for the channel impulse response vector corresponding to each antenna to obtain an initial delay-Doppler spectrum comprising the information of all the targets and corresponding to the antenna; and
    performing directional filtering on all the initial delay-Doppler spectra corresponding to all the antennas to obtain the comprehensive delay-Doppler spectra of the received signal which comprise the information of all the targets.

4. The method of claim 2, wherein performing channel impulse response calculation for a received signal of each sensing signal period received by each antenna to obtain a channel impulse response vector corresponding to each antenna comprises:

    sampling each received signal received by each of the antennas based on a preset sampling period to obtain a plurality of pieces of sample data; and
    for each sensing signal period, obtaining the channel impulse response vector corresponding to each of the antennas according to the plurality of pieces of sample data corresponding to the antennas and a sensing signal sent in the sensing signal period.

5. The method of claim 3, wherein performing directional filtering on all the initial delay-Doppler spectra corresponding to all the antennas to obtain the comprehensive delay-Doppler spectra of the received signal which comprise the information of all the targets comprises:

    acquiring a plurality of pieces of angle information;
    calculating, for each sensing signal period, synthetic delay-Doppler spectra at angles corresponding to the angle information for the initial delay-Doppler spectra corresponding to all the antennas; and
    screening all the synthetic delay-Doppler spectra of the sensing signal period to obtain the comprehensive delay-Doppler spectra comprising the information of all the targets in the sensing signal period.

6. The method of claim 5, wherein each delay-Doppler spectrum 2-tuple data in the comprehensive delay-Doppler spectrum is delay-Doppler spectrum 2-tuple data corresponding to a maximum amplitude in the synthetic delay-Doppler spectra corresponding to all the angles.

7. The method of claim 1, wherein performing partitioning, prioritizing, and extraction of the angle information on the comprehensive delay-Doppler spectra to obtain delay-angle-of-arrival spectra of prioritized targets in partitions comprises:

    partitioning the comprehensive delay-Doppler spectra to obtain a plurality of partitions, wherein the partition comprises a plurality of pieces of delay-Doppler spectrum 2-tuple data;
    performing prioritizing on all the delay-Doppler spectrum 2-tuple data corresponding to each of the partitions according to a target number to obtain prioritized delay-Doppler spectrum 2-tuple data corresponding to the partition; and
    performing extraction of the angle information on all the prioritized delay-Doppler spectrum 2-tuple data in the partitions to obtain the delay-angle-of-arrival spectra of the prioritized targets in the partitions, wherein each of the prioritized delay-Doppler spectrum 2-tuple data corresponds to one prioritized target.

8. The method of claim 7, wherein performing prioritizing on all the delay-Doppler spectrum 2-tuple data corresponding to each of the partitions according to a target number to obtain prioritized delay-Doppler spectrum 2-tuple data corresponding to the partition comprises:

    sorting amplitudes of all the delay-Doppler spectrum 2-tuple data corresponding to each of the partitions in a descending or an ascending order of values; and
    performing prioritizing in a descending order on the plurality of sorted delay-Doppler spectrum 2-tuple data corresponding to the partition according to the target number to obtain the prioritized delay-Doppler spectrum 2-tuple data corresponding to the partition.

9. The method of claim 1, wherein determining a moving trajectory according to timing of the delay-angle-of-arrival spectra of the prioritized targets in the partitions comprises:

    determining timing of all the delay-angle-of-arrival spectra according to a plurality of sensing signal periods; and
    obtaining at least one moving trajectory through curve fitting on all the delay-angle-of-arrival spectra according to the timing.

10. The method of claim 1, wherein after determining a moving target according to the moving trajectory, the method further comprises:

    determining an inertial movement trend of the moving target according to the movement trajectory; and
    determining position information of the moving target according to the inertial movement trend and delay-angle-of-arrival spectra of prioritized targets in partitions corresponding to a next sensing signal period.

11. The method of claim 9, wherein after obtaining at least one moving trajectory, the method further comprises:
in a plurality of comprehensive delay-Doppler spectra, in response to presence of a target with a relative position change less than a preset threshold among the prioritized targets after the partitioning, determining the target as an interference target.

12. A communication device, comprising:

at least one processor; and

at least one memory, configured for storing at least one program,

wherein the at least one program, when executed by the at least one processor, causes the at least one processor to perform the partition trajectory target sensing method of any one of claims 1 to 11.

13. A computer-readable storage medium, storing a processor-executable program which, when executed by a processor, causes the processor to perform the partition trajectory target sensing method of any one of claims 1 to 11.

14. A computer program product, comprising a computer program or computer instructions stored in a computer-readable storage medium, wherein the computer program or computer instructions, when read from the computer-readable storage medium and executed by a processor of a computer device, causes the computer device to perform the partition trajectory target sensing method of any one of claims 1 to 11.

FIG. 1

FIG. 2

```
                                              ┌─────────────────┐
                                              │  Sensing target │ ─────── 120
                                              │                 │
  ┌──────────────┐        ┌──────────────────┐│
  │              │        │  Moving sensing  ││ ─────── 121
  │ Sending node │ ◄────► │     target       ││
  │              │        └──────────────────┘│        ┌─────────────────┐
  │     110      │        ┌──────────────────┐│ ◄────► │ Receiving node  │
  └──────────────┘        │   Interference   ││        │      130        │
                          │  sensing target  ││        └─────────────────┘
                          └──────────────────┘│ ─────── 122
                                              └─────────────────┘
```

FIG. 3

Perform delay-Doppler spectrum calculation for a received signal of each received sensing signal period to obtain comprehensive delay-Doppler spectra of the received signal which include information of all targets, where the comprehensive delay-Doppler spectrum includes angle information — S100

Perform partitioning, prioritizing, and extraction of the angle information on the comprehensive delay-Doppler spectra to obtain delay-angle-of-arrival spectra of prioritized targets in partitions — S200

Determine a moving trajectory according to timing of the delay-angle-of-arrival spectra of the prioritized targets in the partitions — S300

Determine a moving target according to the moving trajectory — S400

FIG. 4

Perform channel impulse response calculation for a received signal of each sensing signal period received by each antenna to obtain a channel impulse response vector corresponding to the antenna

S510

↓

Perform delay-Doppler spectrum calculation for all the channel impulse response vectors corresponding to all the antennas to obtain the comprehensive delay-Doppler spectra of the received signal which include the information of all the targets

S520

FIG. 5

Perform delay-Doppler spectrum calculation for the channel impulse response vector corresponding to each antenna to obtain an initial delay-Doppler spectrum including the information of all the targets and corresponding to the antenna

S610

↓

Perform directional filtering on all the initial delay-Doppler spectra corresponding to all the antennas to obtain the comprehensive delay-Doppler spectra of the received signal which include the information of all the targets

S620

FIG. 6

Sample each received signal received by each of the antennas based on a preset sampling period to obtain a plurality of pieces of sample data

S710

↓

For each of the sensing signal periods, obtaining the channel impulse response vector corresponding to each of the antennas according to the plurality of pieces of sample data corresponding to the antennas and a sensing signal sent in the sensing signal period

S720

FIG. 7

Acquire a plurality of pieces of angle information ⟋S810

Calculate, for each sensing signal period, synthetic delay-Doppler spectra at angles corresponding to the angle information for the initial delay-Doppler spectra corresponding to all the antennas ⟋S820

Screen all the synthetic delay-Doppler spectra of the sensing signal period to obtain the comprehensive delay-Doppler spectra including the information of all the targets in the sensing signal period ⟋S830

FIG. 8

Partition the comprehensive delay-Doppler spectra to obtain a plurality of partitions, where the partition includes a plurality of pieces of delay-Doppler spectrum 2-tuple data ⟋S910

Perform prioritizing on all the delay-Doppler spectrum 2-tuple data corresponding to each of the partitions according to a target number to obtain prioritized delay-Doppler spectrum 2-tuple data corresponding to the partition ⟋S920

Perform extraction of the angle information on all the prioritized delay-Doppler spectrum 2-tuple data in the partitions to obtain the delay-angle-of-arrival spectra of the prioritized targets in the partitions, where each of the prioritized delay-Doppler spectrum 2-tuple data corresponds to one prioritized target ⟋S930

FIG. 9

Sort amplitudes of all the delay-Doppler spectrum 2-tuple data corresponding to each partition in a descending or an ascending order of values  S1010

Perform prioritizing in a descending order on the plurality of sorted delay-Doppler spectrum 2-tuple data corresponding to the respective partition according to the target number to obtain the prioritized delay-Doppler spectrum 2-tuple data corresponding to the respective partition  S1020

FIG. 10

Determine timing of all the delay-angle-of-arrival spectra according to a plurality of sensing signal periods  S1110

Obtain at least one moving trajectory through curve fitting on all the delay-angle-of-arrival spectra according to the timing  S1120

FIG. 11

Determine an inertial movement trend of the moving target according to the movement trajectory  S1210

Determine position information of the moving target according to the inertial movement trend and delay-angle-of-arrival spectra of prioritized targets in partitions corresponding to a next sensing signal period  S1220

FIG. 12

In a plurality of comprehensive delay-Doppler spectra, when there is a target with a relative position change less than a preset threshold among the prioritized targets after the partitioning, determine the target as an interference target

S1300

FIG. 13

a1

a2

a3

FIG. 14

Frequency

Time

a4

a5

a1

FIG. 15

FIG. 16

FIG. 17

FIG. 18

FIG. 19

FIG. 20

Trajectory of target 1    Trajectory of target 2

FIG. 21

Flight route

FIG. 22

FIG. 23

220

Processor

Bus

210

Memory

Communication device

200

FIG. 24

## INTERNATIONAL SEARCH REPORT

International application No.

**PCT/CN2023/091900**

### A. CLASSIFICATION OF SUBJECT MATTER

H04W 4/029(2018.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CJFD, CNABS, CNTXT, VEN, CNKI, WOTXT, EPTXT, USTXT: 到达, 到达角, 到达时间差, 定位, 多普勒, 时序, 分区, 轨迹, 时延, AOA, angle of arrival, position, location, Doppler, time sequence, region, trace, delay

### C. DOCUMENTS CONSIDERED TO BE RELEVANT

| Category* | Citation of document, with indication, where appropriate, of the relevant passages | Relevant to claim No. |
|---|---|---|
| A | US 8588808 B2 (NICE-SYSTEMS LTD.) 19 November 2013 (2013-11-19) description, paragraphs [0033]-[0176] | 1-14 |
| A | CN 1898975 A (TRUEPOSITION INC.) 17 January 2007 (2007-01-17) entire document | 1-14 |
| A | US 6489923 B1 (NORTEL NETWORKS LTD.) 03 December 2002 (2002-12-03) entire document | 1-14 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 July 2023** | **20 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
#### Information on patent family members

| International application No. |
|---|
| **PCT/CN2023/091900** |

| Patent document cited in search report | | | Publication date (day/month/year) | Patent family member(s) | | | Publication date (day/month/year) |
|---|---|---|---|---|---|---|---|
| US | 8588808 | B2 | 19 November 2013 | US | 2014106776 | A1 | 17 April 2014 |
| | | | | US | 9002378 | B2 | 07 April 2015 |
| | | | | US | 2011287778 | A1 | 24 November 2011 |
| CN | 1898975 | A | 17 January 2007 | JP | 2007518979 | A | 12 July 2007 |
| | | | | JP | 5026086 | B2 | 12 September 2012 |
| | | | | US | 2005148346 | A1 | 07 July 2005 |
| | | | | US | 7440762 | B2 | 21 October 2008 |
| | | | | BRPI | 0418136 | A | 17 April 2007 |
| | | | | KR | 20070026345 | A | 08 March 2007 |
| | | | | KR | 101183753 | B1 | 17 September 2012 |
| | | | | CA | 2548669 | A1 | 21 July 2005 |
| | | | | CA | 2548669 | C | 06 May 2014 |
| | | | | MXPA | 06007257 | A | 18 August 2006 |
| | | | | US | 2008248811 | A1 | 09 October 2008 |
| | | | | US | 7925274 | B2 | 12 April 2011 |
| | | | | GB | 0612619 | D0 | 23 August 2006 |
| | | | | GB | 2426647 | A | 29 November 2006 |
| | | | | GB | 2426647 | B | 13 February 2008 |
| | | | | IL | 176192 | A0 | 05 October 2006 |
| | | | | IL | 176192 | A | 31 March 2011 |
| | | | | WO | 2005065320 | A2 | 21 July 2005 |
| | | | | WO | 2005065320 | A3 | 20 April 2006 |
| | | | | EP | 1704734 | A2 | 27 September 2006 |
| | | | | EP | 1704734 | A4 | 21 October 2009 |
| | | | | CA | 2821652 | A1 | 21 July 2005 |
| | | | | CA | 2821652 | C | 22 July 2014 |
| | | | | AU | 2004311881 | A1 | 21 July 2005 |
| | | | | AU | 2004311881 | B2 | 31 July 2008 |
| US | 6489923 | B1 | 03 December 2002 | US | 6778130 | B1 | 17 August 2004 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211182526